# EUROPEAN PATENT APPLICATION

(11) **EP 4 835 400 A1**
(43) Date of publication of application: **04.11.2026**
(21) Application number: 25173207.9
(22) Date of filing: 29.04.2025
(51) Int. Cl.: G01B 11/25

(54) **REAL-TIME VISUALIZATION OF AN OBJECT WHILE BEING SCANNED**

(71) Applicant: Volume Graphics GmbH, 69115 Heidelberg (DE)
(72) Inventor: REITER, Sebastian, 69221 Dossenheim (DE)
(74) Representative: Kaminski Harmann

(57) **Abstract**

The invention pertains to a computer-implemented method (100) for visualizing the progress of a scanning process of an object, the method comprising, in real time: receiving (110) data points from a scanning device performing the scanning process of the object; adding (120) the received data points to a three-dimensional grid comprising nodes and edges; assigning (130) each of the added data points to the closest node of the grid; calculating (140) averaged data points for each closest node of the grid to which data points are assigned, wherein a position of each averaged data point is calculated based on the positions of all points assigned to the respective closest node; generating (150) a mesh connecting all averaged data points; and visualizing (160) the mesh to a user of the scanning device.

## Description

The present invention pertains to a computer-implemented method of visualizing a pre-view of an object in real time while the object is being scanned, i.e., before the scan is completed and before a final high-precision mesh is created after completion of the scanning process. In that way, a preliminary visualization may be provided based on partial data to aid the user in completing the scan.

It is known to perform 3D scanning of real-world objects or environments to capture three-dimensional data of its shape in order to generate a 3D model of the object. 3D scanners can be based on many different technologies. They include terrestrial laser scanners (TLS) as well as hand-held scanners, such as the Absolute Scanner AS1 of Hexagon. Hand-held laser scanners may be mounted on an absolute arm and/or be tracked by a laser tracker to allow acquiring absolute coordinates of the measured points.

When scanning a real-world object with such a hand-held laser scanner, hundreds of thousands of points may be acquired per second while a user moves the scanner across the surface of the object. For instance, using a line laser, points can be captured in individual stripes. While moving the scanner, more and more stripes are acquired. Those points are agglomerated by a computer software for later use in geometric dimensioning and tolerancing (GD&T) or for reconstruction purposes.

While scanning the object, the user has to ensure that the whole surface of the object is scanned. However, with existing approaches, there is no way to know for certain which parts of the object still need to be scanned, before the mesh has been calculated from the scan data. For instance, existing approaches, such as *Reshaper, Polyworks,* or *Geomagic,* first agglomerate a large batch of captured points before meshing this batch and merging it into an existing mesh. This solution leads to a two-phase workflow, where the user first has to scan a surface patch and afterwards inspect the visualized mesh for missing parts. Other approaches generate meshes from scanned points using so-called *Truncated Signed Distance Functions.* To this end, distances to a local surface reconstruction are recorded in a voxel grid. A mesh can be extracted from those distance values, using, e.g., the well-known *Marching Cubes* method. However, due to the computational overhead of local surface approximation and the number of values that have to be adjusted for each inserted point, this solution is not suited for real-time mesh generation with tens to hundreds of updates per second.

It is therefore an object of the present invention to provide an improved method for providing visual feedback to the user of a hand-held laser scanner regarding the scanned portions of the object.

It is a particular object to provide such a method that allows providing the visual feedback faster and in real time, in particular immediately.

At least one of these objects is achieved by the method according to claim 1, the system according to claim 11 and/or the dependent claims of the present invention.

A first aspect of the invention pertains to a computer-implemented method for visualizing the progress of a scanning process of an object. The method comprises, in real time:
- receiving data points from a scanning device performing the scanning process of the object;
- adding the received data points to a three-dimensional grid comprising nodes and edges;
- assigning each of the added data points to the closest node of the grid;
- calculating averaged data points for each closest node of the grid to which data points are assigned, wherein a position of each averaged data point is calculated based on the positions of all points assigned to the respective closest node;
- generating a mesh connecting all averaged data points; and
- visualizing the mesh to a user of the scanning device.

According to some embodiments of the method, generating the mesh is performed using a Marching Cubes algorithm.

According to some embodiments of the method, receiving the data points comprises receiving a surface normal for each data point. For instance, said surface normal may be an estimated surface normal and/or may correspond to an inverted scanning direction. According to some embodiments, an averaged surface normal is calculated for each averaged data points. According to some embodiments, generating the mesh is based on the averaged surface normals.

According to some embodiments of the method,
- the scanning process is performed continuously, and the data points are received continuously from the scanning device;
- for each closest node of the grid to which new data points are assigned, a new averaged data point is calculated;
- the mesh is continuously updated to connect all averaged data points including new averaged data points; and
- the continuously updated mesh is visualized in real time.

According to some embodiments of the method, the mesh is visualized to the user within less than a tenth of a second after the data points are received.

According to some embodiments of the method, the scanning device is a hand-held laser scanner, such as a line scanner, and performing the scanning process comprises the user moving the scanning device across a surface of the object. According to some embodiments, receiving the data points from the scanning device comprises receiving at least one hundred thousand data points per second.

According to some embodiments of the method, the three-dimensional grid is a sparse grid or a fine grid.

According to some embodiments, the method comprises, after the scanning process is completed, computing a 3D model of the object based on the data points.

A second aspect of the invention pertains to a scanning system. The scanning system comprises a hand-held laser scanner configured to scan an object by emitting a measurement beam towards a surface of the object, a display device comprising a display and a computing unit. The computing unit is configured to perform a visualization process for visualizing the progress of a scanning process of the object performed by the scanning device, the visualization process comprising, in real time:
- receiving data points from the scanning device;
- adding the received data points to a three-dimensional grid comprising nodes and edges;
- assigning each of the added data points to the closest node of the grid;
- calculating averaged data points for each closest node of the grid to which data points are assigned, wherein a position of each averaged data point is calculated based on the positions of all points assigned to the respective closest node;
- generating a mesh connecting all averaged data points; and
- effecting the display to visualize the mesh to a user of the system.

According to some embodiments of the system, the computing unit is part of the display device.

According to some embodiments of the system, the computing unit is configured to compute a 3D model of the object based on the data points after the scanning process is completed.

According to some embodiments of the system, the hand-held laser scanner is mounted to an articulated arm. According to some embodiments, the display device is mounted to the hand-held laser scanner or the articulated arm.

A third aspect of the invention pertains to a computer program product comprising program code for performing the method according to the first aspect of the invention. For instance, the computer program product may be run by the computing unit of a system according to the second aspect of the invention. In some embodiments, the computer program product is stored on a non-volatile memory.

The invention in the following will be described in detail by referring to exemplary embodiments that are accompanied by figures, in which:
- Fig. 1: shows an exemplary system according to the invention while scanning an object;
- Figs. 2a-b: illustrate a sparse grid hierarchy;
- Figs. 3a-f: illustrate steps of an exemplary embodiment of a method according to the invention; and
- Fig. 4: is a flowchart illustrating an exemplary embodiment of a method according to the invention.

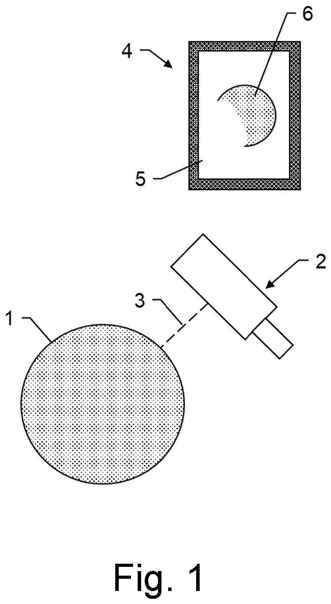

Figure 1 shows an exemplary system according to the invention while scanning an object 1. The system comprises a hand-held 3D laser scanner 2 that emits measurement beams in a laser fan 3 towards a surface of the object 1 to measure stripes of surface points while the laser fan 3 is moved over the surface. Optionally, to allow acquiring absolute coordinates of the measured points, the hand-held laser scanner 2 may be mounted on an articulated arm and/or be tracked by a laser tracker while being moved by a user. The system also comprises a display device 4 comprising a display 5, on which a pre-view image 6 can be displayed in real time to the user of the hand-held laser scanner 2. Although shown here as a separate device, the display device 4 may be integrated into the laser scanner 2 or be configured to be mounted to the laser scanner 2 or to the articulated arm. The pre-view image 6 shows those parts of the object that already have been scanned, thus allowing the user to more quickly scan the whole object 1 without gaps. A computing unit of the system (not shown here) is configured to perform a method according to the invention that allows visualizing the pre-view image 6 with an emphasis on speed and interactivity. For instance, the computing unit may be part of the display device 4.

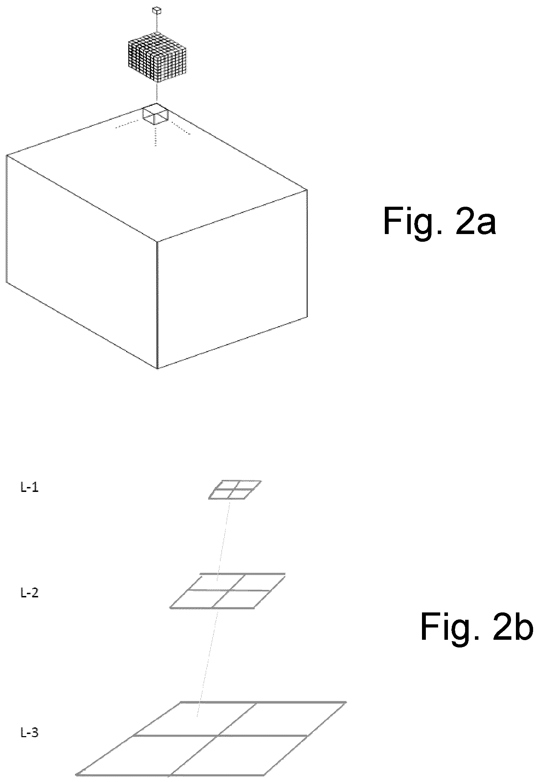

Figures 2a and 2b illustrate an exemplary hierarchy of a sparse grid used in an exemplary embodiment of a method according to the invention. This method uses an approach which efficiently agglomerates close points in an axis-aligned, regular, sparse grid hierarchy. For instance, the sparse grid hierarchy may be constructed in a similar way as described by the *OpenVDB* approach. To this end, a fine grid spacing is chosen, and an initial coarse cell is constructed so that the first batch of provided points lies close to its center.

The initial coarse cell contains a fixed grid and has a finite size. It is possible that the user scans points which are not contained in this initial coarse cell. Multiple coarse cells allow scanning of large objects or objects which are far from each other. While they are corresponding to the cells of a regular grid, they are not stored in a regular grid but associated with a dimensional index. Given the initial coarse cell C[0,0,0], as defined above, with a minimum corner (xMin, yMin, zMin) and an edge length hCoarse, the index of the coarse cell containing a point P=(x,y,z) can be computed as I=[floor ((x-xMin)/hCoarse, floor ((y-yMin)/hCoarse), floor ((z-zMin)/hCoarse)]. On the coarse level, a map is used through which a coarse cell can be accessed by providing such an index. Only those coarse cells are created which contain a point.

If a point is inserted outside of the bounds of the initial coarse cell, then an additional coarse cell is created, which contains that new point, and the algorithm proceeds with that coarse cell for the given point. The first coarse cell defines a three-dimensional regular structured grid, where the minimum corner of the initial coarse cell defines the origin of that grid. Cells in this grid can be identified with a three-dimensional index. Coarse cells can be accessed using this three-dimensional index and are only created if required.

Figure 2b shows 2D representations of three levels L-1, L-2, L-3 of a sparse hierarchical grid. L-3 is the base grid. Each cell of the base grid may hold a child grid with half the edge length. This child grid is considered to be in the next level L-2. If a point is inserted into a cell of the base grid L-3, it is forwarded to the child grid. If no such child grid exists, it is created, and the point is forwarded to the new child grid.

Similar to the base grid L-3, each cell in grid L-2 may contain a child grid. If a point is inserted into a cell of this grid, it is forwarded to the respective child grid. Again, if no such child grid exists, it is created, and the point is forwarded to the new child grid. A mesh is associated with each grid on this level L-2 (each corresponding to a cell in the parent level L-3). This mesh is later used for rendering. After the meshing is performed in the leaf grids of the top level L-1, the individual meshes of all children are joined into the associated meshes of level L-2. Only if new points are inserted into a grid on level L-2, the meshes will have to be joined again.

Individual fine grid cells are grouped in structured grids containing N×N×N cells (e.g., N = 8). In a sparse hierarchical grid structure with L levels, those structured grids residing at level L-1 are the leaves of the structure. On level L-2, the structured grids are contained in a sparse grid node of M×M×M cells (e.g., M=16). An individual mesh is associated with each such sparse grid node on level L-2. When preparing the visualization for the next frame, all those sparse grid nodes on level L-2 have to be visited, which contain children whose timestamp is more recent than the last mesh update.

The mesh and each such sparse grid cell can now be updated in parallel:
- Sum the collected values from the fine grid cells in associated active corner nodes, i.e., the sum of positions, the sum of estimated normals, and the number of points which are contained by a cell.
- For each fine cell which contains both empty and non-empty corner nodes, we can now construct a triangulation between the averaged positions at the non-empty corners. To this end, we utilize the triangle table described in the "Marching Cubes" algorithm. Non-empty nodes are considered as *inner* nodes, empty nodes as *outer* nodes. Instead of placing vertices on cell edges, we place them at the averaged position stored in the associated non-empty node of an inserted edge.
- By comparing normals of generated triangles with the averaged estimated normals of corresponding non-empty nodes, we can quickly eliminate triangles which face into the interior of a scanned object, on the fly.

Updates done in individual cells during the described meshing-update procedure are fully decoupled from those in other cells. The algorithm is thus suited for parallel execution. For all cells on level L-2, whose mesh has just been updated, we can now update associated render buffers on the GPU. Due to the local nature of the described update procedure, typically only a small fraction of the overall vertex data of the visualized mesh has to be updated. The transferred amount of data to the GPU is thus small and the update is highly efficient.

In contrast to other grid-based meshing approaches of point clouds, insertion of new points is completely local and only affects the one cell which contains the given point. This allows for a much higher number of points which can be processed per second, and ultimately for much higher update rate of the visualization for large point sets. The latter is crucial for a fluid and interactive visualization, which in turn is crucial for an efficient scanning process.

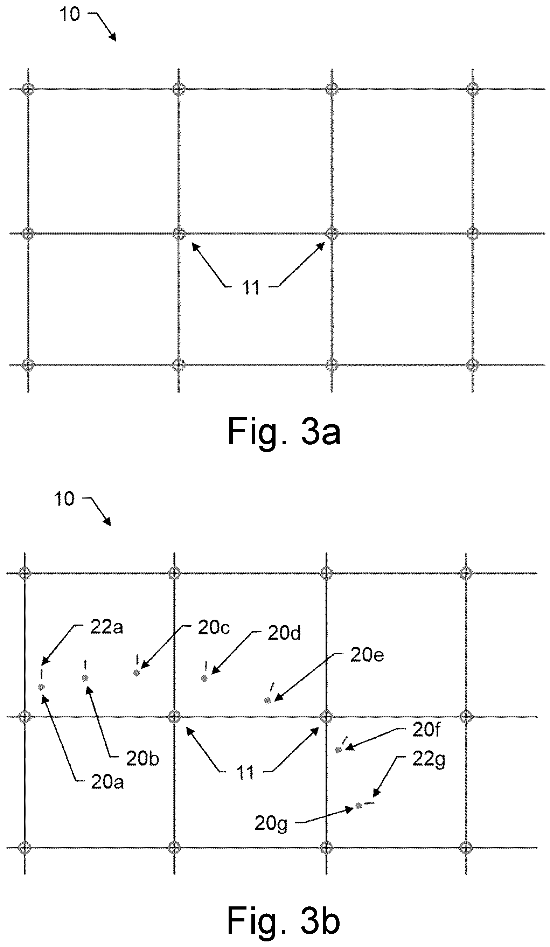

Figures 3a to 3f illustrate steps of an exemplary embodiment of a method according to the invention. Although the real scanning is usually performed in 3D, for reasons of clarity and simplicity, the grid is shown in 2D here.

This method allows to generate a very fast, yet detailed mesh based visualization of the scanned surface on the fly, while scanning is still in progress. New points can be quickly inserted into the existing structure and are immediately considered in highly efficient local updates of the visualized surface mesh. This method allows for viewing the preview mesh from any perspective, and even fluidly adapting the perspective to the orientation of the moving laser scanner while new points are inserted into the mesh and the mesh is continuously growing. The method allows providing users of a 3D stripe-based laser scanner immediate feedback (i.e., within fractions of a second) on the acquired surface during a scan process. This allows users to monitor and to adjust their scanning process in the very moment in which they acquire points of a certain structure of the scanned part.

As opposed to other approaches, the presented approach combines point agglomeration and mesh generation for visualization into one phase. Points are inserted into a continuously growing mesh on the fly. The visual feedback provided to the user is immediate and allows for a much tighter control of the scanning process.

Figure 3a shows an empty fine grid 10 comprising nodes (represented by circles) and edges (represented by lines) forming cells. The unfilled circles shown here represent "inactive" nodes 11. In Figure 3b, seven scanned points 20a-g are added to this fine grid 10. For each of the points 20a-g an estimated surface normal 22a-g (e.g., the scan direction) is provided - indicated here by a short line next to the respective point.

To insert this batch of points into the preview visualization, for each of the points 20a-g a cell of the fine grid 10 is found which geometrically contains that point. For each such fine grid cell, the sum of point positions which have already been inserted into that cell, the sum of estimated normals 22a-g of each inserted point 20a-g (e.g., the inverse scanning direction), and the number of inserted point positions are stored.

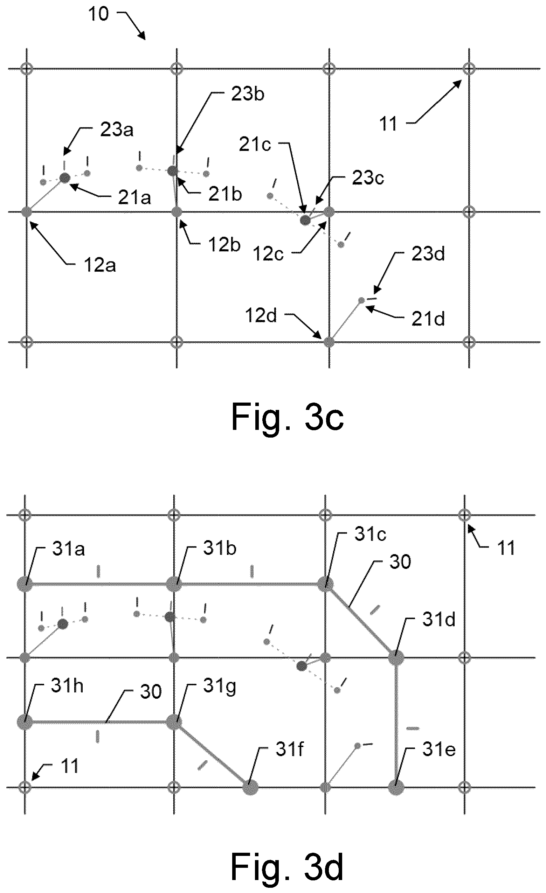

In Figure 3c, for each node in the grid average close data points 21a-d and their respective surface normal 23a-d are determined. Initially, all nodes are considered inactive (inactive nodes 11). If the distance of a node (cell corner) to one of the points 21a-d that were inserted is smaller or equal to half of the cell diameter, then the node/corner is considered active from then on. In each fine cell, a bit pattern may be stored which yields the active nodes 12 of that cell. The scanned points 20a-g of Figure 3b all lie close to four of the nodes in the grid 10. These nodes are thus "active" nodes 12 (represented by filled circles), while the other nodes that do not have any close points remain inactive nodes 11. For all points being closest to the first active node 12a, an average data point 21a and a corresponding average surface normal 23a are determined. The same is done for the second active node 12b (average data point 21b, average surface normal 23b) and for the third active node 12c (average data point 21c, average surface normal 23c). Since only one data point 20g is closest to the fourth active node 12d, average data point 21d (with average surface normal 23d) is equal to that data point. Calculating the average data points 21a-d may be based on the previously stored number of point positions and the stored sum of point positions. Similarly, calculating the average surface normals 23a-d may be based on the previously stored number of point positions and the stored sum of estimated normals.

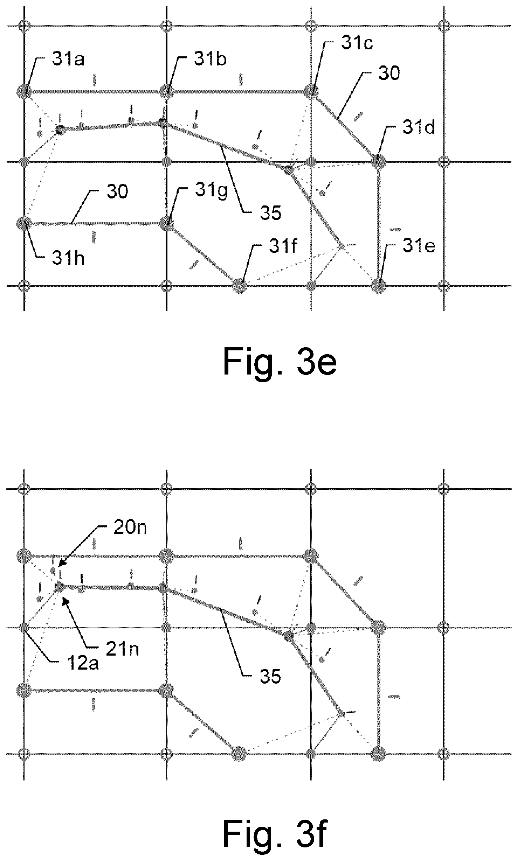

Figures 3d and 3e illustrate how the Marching Cubes algorithm is applied. In Figure 3d, active nodes (i.e., nodes having at least one associated data point) are considered as being "inside". Inactive nodes 11 are considered as being "outside". This information is sufficient to generate triangles using marching cubes/squares rules. For visualization, the position of the generated vertices 31a-h is visualized on the center of intersected edges.

In Figure 3e, the position of each generated vertex 31a-h is chosen to be the position of the associated averaged point 21a-d of the inner corner (= active node) of the intersected marching cubes edge. Those triangles, whose normal points into the opposing direction of at least one of the averaged normals 23a-c associated with the triangle's corners, are filtered out. The resulting surface connects the generated averaged data points 21a-d to create a mesh 35. It has to be understood that while the mesh here is represented by a 2D polyline, in 3D it is mesh 35 of triangles. This mesh 35 of triangles representing an object's surface can then be visualized to a user to indicate the progress of the scanning.

Figure 3f finally illustrates how adding further data points changes the mesh of triangles and thus updates the visualization presented to the user in real time. Here, an additional measurement point 20n is added together with its estimated normal, effecting the average close point (21a) to change its position, i.e., to become a new average close point 21n. In addition, the normal for this point is adapted (not shown here), and the point counter of the node 12a is increased from 2 to 3. Due to the change in position of the average close point 21n the mesh 35 is changed locally - in the shown example only the left segment is altered.

Advantageously, with the described method, adding more data points to an existing grid 10 is very efficient. The sum of all close data points and the number of close data points are kept in each grid node. When adding a new point 20n, the closest node has to be found, the point's position is added to the sum of positions at that node, and the close data point counter is increased by one.

To reduce grid artifacts in the reconstructed mesh, data points may be agglomerated at cells. Before meshing, those agglomerated values have to be considered in all active corner nodes of modified cells. To this end, in a first step the values in the corner nodes of each modified cell have to be cleared. Afterwards, for each cleared node, the agglomerated values of all neighbouring cells for which the node is an active node, are added to the sum of positions at the node. A node thus effectively averages data points from all neighbouring cells. This reduces the influence of outlier data points and reduces grid related artifacts in the extracted surface mesh.

Thus, here the position of the newly inserted point 20n is added to the sum of positions of the node 12a to which the new point is assigned, the point counter of node 12a is increased by one, and the timestamp of the parent cell of that node's cell is updated, so that it is known that the parent cell contains data which has not yet been considered in the resulting mesh.

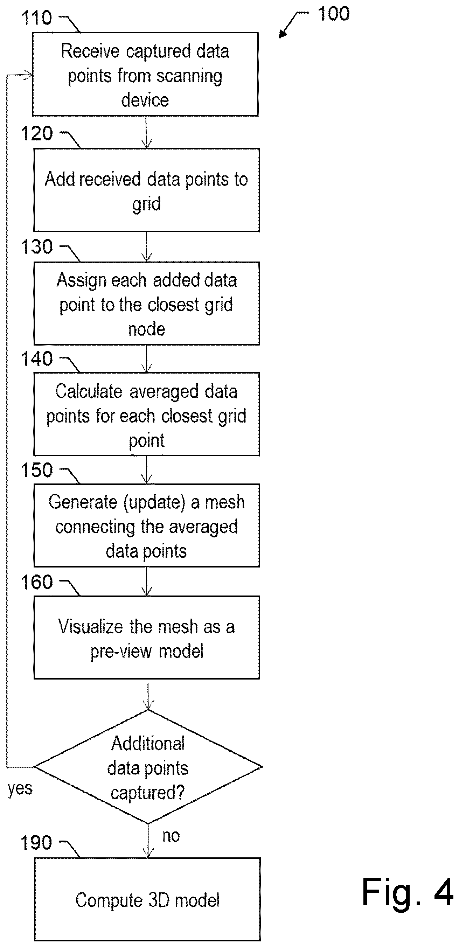

The flowchart of Figure 4 illustrates an exemplary embodiment of a computer-implemented method 100 according to the invention.

By scanning an object, a plurality of data points is captured. This may be performed by a user holding a hand-held laser scanner. As illustrated with respect to Figure 3b, the captured data points are added 110 to the grid. Each of the added data points is assigned 120 to the closest node of the grid. For each node that has been assigned at least two data points, an averaged data point is calculated 130 using the positions of all data points assigned to that node. This may comprise summing the values from all data points assigned to the same node, so that the sum of positions, the sum of estimated normals and the number of points are assigned to the node. A mesh, which connects the averaged data points, is generated 140 and visualized 150 to a user in real time as a pre-view model of the object while the user continues the scanning of the object. The steps 110 to 150 are repeated, with the surface being continuously updated while further data points are being captured, until the scanning is completed. Finally, when the scanning is completed, a "real" 3D model of the scanned object can be computed 160.

The illustrated method may be performed by the system of Figure 1. For instance, a computer program running on the system's computing unit may comprise program code for execution of the method.

Although the invention is illustrated above, partly with reference to some preferred embodiments, it must be understood that numerous modifications and combinations of different features of the embodiments can be made. All of these modifications lie within the scope of the appended claims.

## Claims

1. Computer-implemented method (100) for visualizing the progress of a scanning process of an object (1), the method comprising, in real time,
- receiving (110) data points (20) from a scanning device (2) performing the scanning process of the object (1);
- adding (120) the received data points to a three-dimensional grid (10) comprising nodes (11, 12) and edges;
- assigning (130) each of the added data points to the closest node (12) of the grid (10);
- calculating (140) averaged data points (21) for each closest node (12) of the grid (10) to which data points are assigned, wherein a position of each averaged data point (21) is calculated based on the positions of all points assigned to the respective closest node (12);
- generating (150) a mesh (35) connecting all averaged data points (21); and
- visualizing (160) the mesh (35) to a user of the scanning device (2).

2. Method (100) according to claim 1, wherein generating (150) the mesh (35) is performed using a Marching Cubes algorithm.

3. Method (100) according to claim 1 or claim 2, wherein receiving (110) the data points (20) comprises receiving a surface normal (22) for each data point, particularly wherein the surface normal (22) is an estimated surface normal and/or corresponds to an inverted scanning direction.

4. Method (100) according to claim 3, wherein an averaged surface normal (23) is calculated for each averaged data points (21).

5. Method (100) according to claim 4, wherein generating (150) the mesh (35) is based on the averaged surface normals (23).

6. Method (100) according to any one of the preceding claims, wherein
- the scanning process is performed continuously, and the data points (20) are received (110) continuously from the scanning device (2);
- for each closest node (12) of the grid (10) to which new data points (20n) are assigned, a new averaged data point (21n) is calculated;
- the mesh (35) is continuously updated to connect all averaged data points (21) including new averaged data points (21n); and
- the continuously updated mesh (35) is visualized (160) in real time.

7. Method (100) according to any one of the preceding claims, wherein the mesh (35) is visualized (160) to the user within less than a tenth of a second after the data points (20) are received (110).

8. Method (100) according to any one of the preceding claims, wherein
- the scanning device (2) is a hand-held laser scanner, particularly a line scanner, and
- performing the scanning process comprises the user moving the scanning device (2) across a surface of the object (1),
particularly wherein receiving (110) the data points (20) from the scanning device (2) comprises receiving at least one hundred thousand data points (20) per second.

9. Method (100) according to any one of the preceding claims, wherein the three-dimensional grid (10) is a sparse or fine grid.

10. Method (100) according to any one of the preceding claims, comprising, after the scanning process is completed, computing (190) a 3D model of the object (1) based on the data points (20).

11. Scanning system, comprising
- a hand-held laser scanner (2) configured to scan an object (1) by emitting a measurement beam (3) towards a surface of the object (1),
- a display device (4) comprising a display (5), and
- a computing unit,
**characterized in that**
the computing unit is configured to perform a visualization process for visualizing the progress of a scanning process of the object (1) performed by the scanning device (2), the visualization process comprising, in real time,
- receiving (110) data points (20) from the scanning device (2);
- adding (120) the received data points to a three-dimensional grid (10) comprising nodes (11, 12) and edges;
- assigning (130) each of the added data points to the closest node (12) of the grid (10);
- calculating (140) averaged data points (21) for each closest node (12) of the grid (10) to which data points are assigned, wherein a position of each averaged data point (21) is calculated based on the positions of all points assigned to the respective closest node (12);
- generating (150) a mesh (35) connecting all averaged data points (21); and
- effecting the display (5) to visualize (160) the mesh (35) to a user of the system.

12. Scanning system according to claim 11, wherein the computing unit is part of the display device (4).

13. Scanning system according to claim 11 or claim 12, wherein the computing unit is configured to compute (190) a 3D model of the object (1) based on the data points (20) after the scanning process is completed.

14. Scanning system according to any one of claims 11 to 13, wherein the hand-held laser scanner (2) is mounted to an articulated arm, particularly wherein the display device (4) is mounted to the hand-held laser scanner (2) or the articulated arm.

15. Computer program product comprising program code for performing the method (100) according to any one of claims 1 to 10.
